# EUROPÄISCHE PATENTANMELDUNG

(11) **EP 0 626 771 A2**
(43) Veröffentlichungstag der Anmeldung: **30.11.1994**
(21) Anmeldenummer: 94107927.9
(22) Anmeldetag: 24.05.1994
(51) Int. Cl.: H04L 7/04, G06F 15/336

(54) **Verfahren und Vorrichtung zum Ermitteln einer jeweiligen Abtastphase und zum nachfolgenden Abtasten der Bits eines Datenpakets**

(30) Priorität: 26.05.1993 CH 1579/93
(71) Anmelder: ASCOM TECH AG, CH-3018 Bern (CH)
(72) Erfinder: Beeler, Daniel, CH-8725 Gebertingen (CH); Topliss, Stephen M., Northholt, Middlesex UB5 4RB (GB)
(74) Vertreter: Schwerdtel, Eberhard, Dr.

(57) **Zusammenfassung**

In einem passiven optischen ATM-Netz ergeben sich durch Laufzeitunterschiede zeitlich nicht exakt festlegbare Abtastzeitpunkte. Es ist daher die Aufgabe, für jedes Datenpaket die genaue Phasenlage festzustellen. Hierzu wird der Kopfteil der Pakete jeweils laufend und zeitlich gestaffelt abgetastet, wobei die Staffelung der Zeit "Bitdauer/N verschiedene Abtaster" entspricht (N = Anzahl). Die Abtastwerte werden parallel zueinander in N Schieberegister (33.0 - 33.7) eingelesen. Der sich hierbei aufbauende Inhalt der Schieberegister wird im Bittakt der Pakete daraufhin geprüft, ob er mit einem vorgegebenen Schlüsselwort (S) übereinstimmt oder nicht. Die sich hierdurch ergebenden Prüfbits (P) werden für die Dauer eines Taktschrittes gespeichert. Die jeweils aktuellen und die gespeicherten Prüfbits dienen gemeinsam zum Ermitteln des Zentrums der sich zeigenden Übereinstimmungen. Der Seriellausgang (43.0 - 43.7) desjenigen Schieberegisters (33.0 - 33.7), das dem jeweiligen Zentrum entspricht, gibt anschliessend die Abtastwerte des jeweiligen Pakets ab.

## Beschreibung

Die Erfindung betrifft ein Verfahren und eine Vorrichtung zum Ermitteln einer jeweiligen Abtastphase für Datenpakete, die mit unbekannter Bitphase zeitmultiplexiert ankommen, und zum nachfolgenden Abtasten der Bits des jeweiligen Datenpakets entsprechend dem Oberbegriff der unabhängigen Ansprüche.

Das Lesen digitaler Datensignale auf einer Empfängerseite, an der diese Daten verzerrt und durch Rauschsignale überlagert ankommen, stellt eine bekannte Aufgabe dar.Es kommt dabei darauf an, jedes Bit des digitalen Datensignals optimal abzutasten. Insbesondere sollen die Bits zeitlich etwa in ihrer Mitte durch einen einzigen Abtastschritt abgetastet werden, d.h. an der Stelle der grössten Augenöffnung. Das Mittel hierfür besteht vor allem in einer geeigneten Synchronisierung der Abtastschritte bezüglich des Taktes und der Phase des abzutastenden Datensignals.

Durch die Schrift US Re.32.945 (R.A. Smithson, Rockwell Int. Corp.) ist ein Synchronisierungssystem zur Lösung der genannten Aufgabe bekannt. Hierbei liegt das zu synchronisierende Eingangssignal parallel an acht unabhängigen, gleichen Speichern an. Der interne Takt des Systems, der in der Taktfrequenz exakt mit dem Takt des Eingangssignals übereinstimmt, dessen Phase von der Phase des Eingangssignals jedoch in unbekannter Weise verschieden ist, wird durch sieben serielle Verzögerungsstufen schrittweise um jeweils ein Achtel der Bitlänge des Taktes verzögert. Der Takteingang und der Ausgang jeder Verzögerungsstufe sind nun einem der Speicher zugeordnet und steuern diesen Speicher. In den Speichern sammeln sich jeweils schrittweise Bitfolgen an, die sich aufgrund der unterschiedlichen Abtastzeitpunkte aus dem einzigen Eingangssignal ableiten. Eine nachfolgende Entscheidungslogik ermittelt abschliessend, in welchem der parallelen Speicher das grösste Summensignal enthalten ist und bestimmt hierdurch diejenige Phasenverzögerung des Taktes, die mit dem Eingangssignal am besten übereinstimmt.

Durch die Schrift US 5,140,617 (Kubo; Mitsubishi) ist eine weitere Schaltungsanordnung zur Lösung der eingangs genannten Aufgabe bekannt. Bei dieser Anordnung wird das Eingangssignal schrittweise verzögert, während das einzige Taktsignal parallel das Abtasten der verschieden verzögerten Eingangsssignal-Teilsignale steuert. Die gespeicherten Abtastwerte werden mit einem Testwort kreuzkorreliert. Eine nachgeschaltete Entscheidungslogik ermittelt sodann aus den parallel entstehenden, unterschiedlichen Korrelationsergebnissen ein Maximum, das der jeweils gesuchten Phasenverzögerung zugeordnet ist.

Durch eine weitere, sehr umfangreiche Schrift EP 0 448 074 (Hyodo, Fujitsu) ist eine Synchronisierungseinrichtung zum Synchronisieren von ATM-Zellen bekannt (ATM Asynchronous Trnasfer Mode), bei dem ebenfalls Schieberegister und eine Entscheidungslogik eine Rolle spielen.

Ausgehend von diesem Stand der Technik ist es die Aufgabe der Erfindung in einem passiven Paketnetz, z.B. einem PON (Passive Optical Network) für ATM-Zellen, für jede ankommende Zelle (bzw. jedes Paket) die richtige Abtastphase einzustellen. Dies ist notwendig, da die Zellen zeitmultiplexiert, jedoch mit unterschiedlichen, unbekannten Laufzeiten von unterschiedlichen Datensendern herkommen. Die einzige Lesevorrichtung muss daher unabhängige Zellen abtasten, wobei zwar die Zeitschlitze wohlbekannt sind, wobei jedoch die zeitliche Lage der Zellen innerhalb der Zeitschlitze um einige wenige Bitlängen schwanken kann. Mit anderen Worten bedeutet dies, dass bei jeder Zelle ein Jitterbereich der Länge von etwa 2 bis 3 Datenbits berücksichtigt werden muss.

Die Lösung dieser Aufgabe ist durch den kennzeichnenden Teil der unabhängigen Ansprüche gegeben. Die abhängigen Ansprüche geben Ausgestaltungen der Erfindung an.

Im folgenden wird die Erfindung anhand von acht Figuren beispielsweise näher beschrieben. Hierbei wird durchgängig von Datenpaket gesprochen. Unter diesem Begriff soll insbesondere auch die Zelle eines ATM-Netzes verstanden werden. Es zeigen:
Fig. 1 - Blockschaltbild einer Phasenermittlungsvorrichtung (Stand der Technik)
Fig. 2 - Schematischer Aufbau eines Schieberegisters (Stand der Technik)
Fig. 3 - Aufbau eines Wortkorrelators
Fig. 4 - Aufbau des ersten Teils einer Selektor-Logik
Fig. 5 - Aufbau des zweiten Teils der Selektor-Logik
Fig. 6 - erstes Beispiel zur Erklärung der Funktion der Selektor-Logik
Fig. 7 - zweites Beispiel zur Erklärung der Funktion der Selektor-Logik
Fig. 8 - Blockschaltbild einer zweiten Phasenermittlungsvorrichtung.

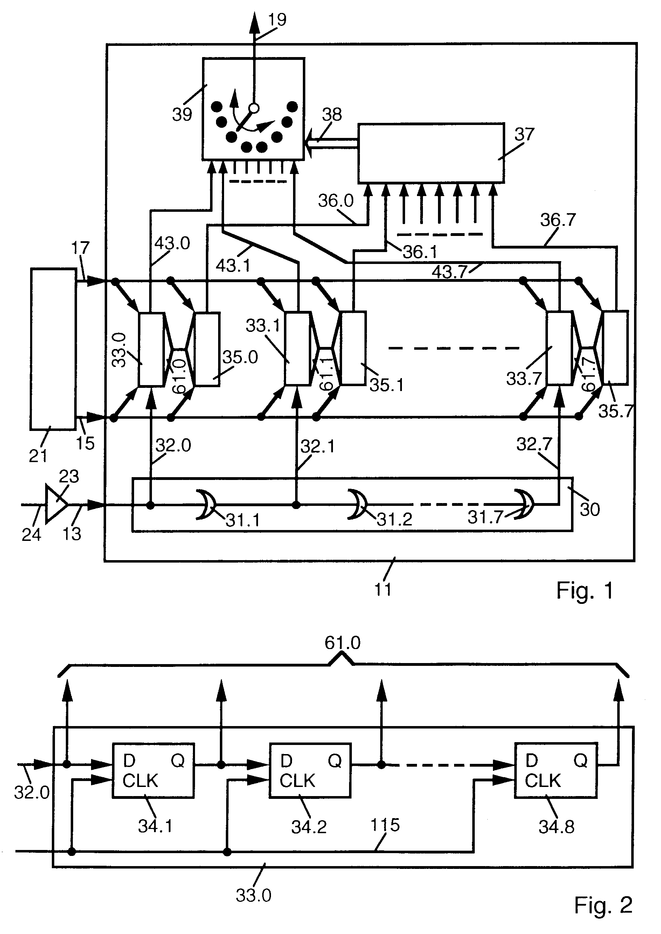

Fig. 1 zeigt als Stand der Technik das generelle Blockschaltbild einer Phasenermittlungsvorrichtung 11. Diese Vorrichtung 11 besitzt einen Dateneingang 13, einen Takteingang 15, einen Triggereingang 17 und einen Datenausgang 19. Als ganzes gesehen erfüllt die Vorrichtung 11 die Aufgaben 〈Abtasten eines Schlüsselwortes, das im Kopfteil eines ankommenden Datenpaketes enthalten ist, wobei der Bittakt bekannt, die Bitphase jedoch unbekannt ist〉, 〈Auswertung der Abtastergebnisse〉, 〈Auswählen der wahrscheinlichen Bitphase〉 und 〈geeignetes Verschieben aller nachfolgenden Bits des jeweiligen Datenpaketes und der Abtastpulse gegeneinander〉.

Der Phasenermittlungsvorrichtung 11 sind zwei periphäre Einheiten zugeordnet:
· Eine Takt- und Triggereinheit 21, die zum einen an den Takteingang 15 einen Takt T abgibt, der dem exakten Bittakt der Datenpakete entspricht. Zum anderen gibt die Einheit 21 nach Abschluss jedes Datenpakets an den Eingang 17 ein Triggersignal ab, das den Beginn des Abtastvorgangs des Schlüsselwortes des nächsten Paketes markiert.
· Ein Eingangsverstärker 23 zum Verstärken der z.B. von einer Übertragungsleitung 24 herkommenden Datenpakete. Hierbei wird die Signalamplitude auf einen vorbestimmten Maximalwert begrenzt. Diesem Eingangsverstärker 23 ist der Dateneingang 13 nachgeschaltet.

Die Phasenermittlungsvorrichtung 11 erledigt im speziellen folgende Verfahrenschritte:
- Sie verzögert die in den Dateneingang 13 seriell einlaufenden Datenpakete D in Analogtechnik schrittweise, so dass sich an N Abgriffen 32.0 - 32.7 einer Verzögerungskette 30 die gleichen Datensignale mit unterschiedlichen Phasen abtasten lassen. Hierbei besteht von Abgriff zu Abgriff eine Verzögerung der Grösse Bitdauer/N, wobei N eine ganze Zahl, z.B. die Zahl 8 ist.
- In Schritten des genannten Taktes T werden an den N Abgriffen 32.0 - 32.7 der Verzögerungskette 30 die jeweiligen, momentan anliegenden Signalwerte des Datenpakets D gleichzeitig abgetastet. Hierbei werden zweiwertige Abtastbits A gebildet, d.h. digitale Werte 0 oder 1, je nach den zum Abtastzeitpunkt bestehenden Signalamplituden.
- Die Abtastbits A werden parallel zueinander in die Serielleingänge von zugeordneten Schieberegistern 33.0 - 33.7 eingelesen. Hierdurch füllen sich diese Schieberegister im Takt T mit jeweils einer Folge von Abtastbits A.

Bis hierher gehört das Verfahren zum Stand der Technik. Die weiteren Schritte sind gegenüber dem genannten Stand der Technik neu.
- Die Folge der Abtastbits A in jedem der Schieberegister 33.0 - 33.7, d.h. der Inhalt der Register wird nach jedem Taktschritt T durch Kreuzkorrelation daraufhin geprüft, ob die jeweilige Folge mit einem vorgegebenen Schlüsselwort S übereinstimmt oder nicht. Dieses Schlüsselwort S weist eine Länge von n Bit, beispielsweise acht Bit auf und ist so gewählt, dass es auch bei Ein-Bit-Fehlern einwandfrei und mit gutem Ergebnis korrelierbar ist. Dies bedeutet, dass bei n korrelierten Bit bereits die Gleichheit von (n-1) der n Bit als Übereinstimmung der Folge und des Schlüsselwortes S gewertet wird. Das Ergebnis jeder Korrelation bzw. Prüfung wird durch jeweils ein Prüfbit P angezeigt, das das Prüfergebnis 〈Übereinstimmung der korrelierten Wörter ja〉 (J) oder 〈Übereinstimmung der korrelierten Wörter nein〉 (K) angibt.
- Die Gesamtheit der Prüfbits P wird im Takt T auf das Auftreten wenigstens eines Wertes ja (J) überwacht. Weiter werden alle Prüfbits P jeweils für die Dauer eines Taktschrittes T gespeichert.
- Die Gesamtheit der gespeicherten und der aktuellen Prüfbits P wird im Takt T gemeinsam ausgewertet zur Ermittlung eines eventuellen Mittelwertes M von mehreren, gemeinsam auftretenden Prüfbits P mit dem Wert ja J. Dies erfolgt in mehreren, sukzessiven Auswerteschritten. Hierbei fügt der erste Schritt die gespeicherten und die aktuellen Prüfbits P mittels der logischen UND-Funktion zusammen. Der zweite Schritt führt die jeweils benachbarten Ergebnisbits des ersten Schrittes ebenfalls mittels der logischen UND-Funktion zusammen. Der dritte Schritt prüft nun, ob nur noch ein einziges Bit des Wertes logisch 1 vorhanden ist oder nicht. Sind mehrere Bit des Wertes logisch 1 vorhanden, dann wiederholen die weiteren Schritte den beschriebenen zweiten und dritten Schritt.
- Ist das verbleibende, einzige Bit schliesslich gefunden, dann gibt der letzte Verfahrenschritt die Position dieses Bits als den gesuchten Mittelwert M an. Weiter wird derjenige Abgriff 32.0 - 32.7, der diesem Mittelwert M zugeordnet ist, in der Folge zum Abtasten der Bits des aktuellen Datenpakets D verwendet.

Die Phasenermittlungsvorrichtung 11 besitzt zur Durchführung der beschriebenen Verfahrenschritte eine Verzögerungskette 30, acht Schieberegister 33.0 - 33.7, acht Wortkorrelatoren 35.0 - 35.7, eine Selektor-Logik 37 und einen achtpoligen Schalter 39.

Die Signalverzögerungskette 30 ist dem Dateneingang 13 nachgeschaltet und verzögert die Signale der ankommenden Datenpakete D in Analogtechnik schrittweise um sieben mal 1/8 Bitlänge. Dies bedeutet mit anderen Worten, dass jedes Verzögerungsglied 31.1 - 31.7 eine Signalverzögerung um den achten Teil der Länge eines Datenbits bewirkt. Die Signalverzögerungskette weist acht Abgriffe 32.0 - 32.7 auf, die mit den Eingängen der Schieberegister 33.0 - 33.7 verbunden sind.

Die Schieberegister 33.0 - 33.7 sind gleich und weisen eine Länge auf, die der Länge des gesuchten Schlüsselwortes S entspricht, im gewählten Beispiel acht Bit. Fig. 2 zeigt den schematischen Aufbau der Schieberegister, z.B. das Register 33.0. Dieses weist acht D-Flipflops 34.1 - 34.8 auf, die eine gemeinsame Taktleitung 115 besitzen. Der D-Eingang des ersten Flipflops 34.1 ist mit dem ersten Abgriff 32.0 der Verzögerungskette 30 verbunden. Die D-Eingänge der weiteren Flipflops 34.2 - 34.8 sind mit dem Q-Ausgang des jeweils vorhergehenden Flipflops verbunden. Dies bedeutet, dass das erste Flipflop 34.1 mit seinem D-Eingang, d.h. dem Serielleingang des Registers, das relativ unbestimmte, analoge Signal am zugeordneten Abgriff 32.0 - 32.7 der Verzögerungskette 30 abtastet, während den anderen Flipflops 34.2 - 34.8 eindeutig definierte Digitalsignale zugeführt werden. Die QB- und die Q-Ausgänge aller D-Flipflops 34.1 - 34.8 bilden die Parallelausgänge des Schieberegisters 33.0, an denen der Inhalt des Registers abgreifbar ist. Der Q-Ausgang des letzten Flipflops bildet den Seriellausgang 43.0 des Registers.

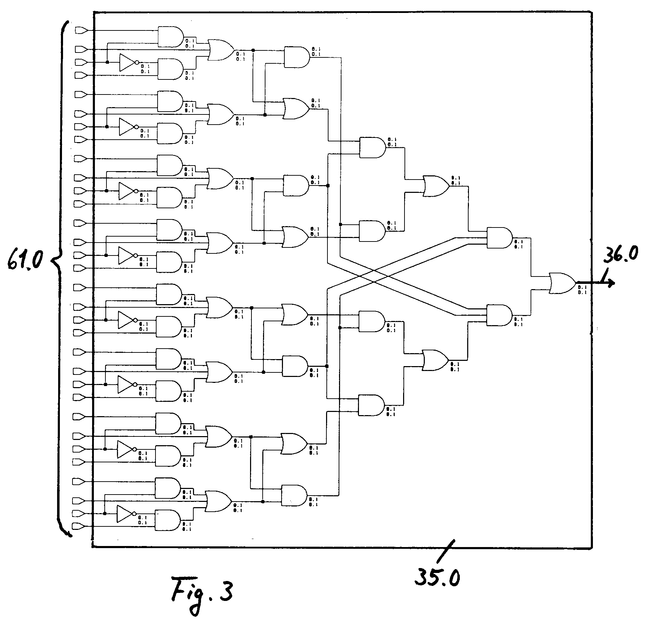

Fig. 3 zeigt den schematischen Aufbau eines Wortkorrelators, z.B. des Korrelators 35.0. Es handelt sich dabei um eine Digitallogik mit insgesamt einundvierzig UND- und ODER-Toren, acht Invertern und acht Vierfach-Eingängen. Diese Eingänge sind mit den Ausgängen des jeweils zugeordneten Schieberegisters, z.B. 33.0 verbunden sowie mit dem Triggereingang 17. Die Digitallogik ist so aufgebaut, dass sie auf Befehl eines Triggerpulses am Eingang 17 den Inhalt des zugeordneten Schieberegisters mit dem vorgegebenen Schlüsselwort S vergleicht. Stimmt der Inhalt des Schieberegisters 33.0 mit dem Schlüsselwort S nicht überein, dann ergibt sich am Ausgang 36 eine logische 0. Stimmt der Inhalt dagegen mit dem Schlüsselwort S überein, so ergibt sich eine logische 1. Hierbei besteht eine Ein-Bit-Fehlertoleranz für den Inhalt des Schieberegisters 33.0.

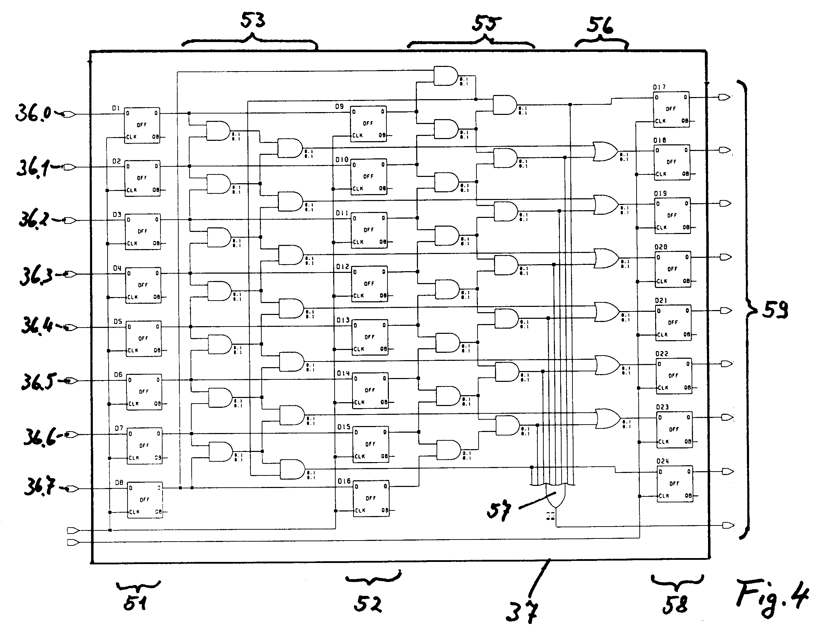

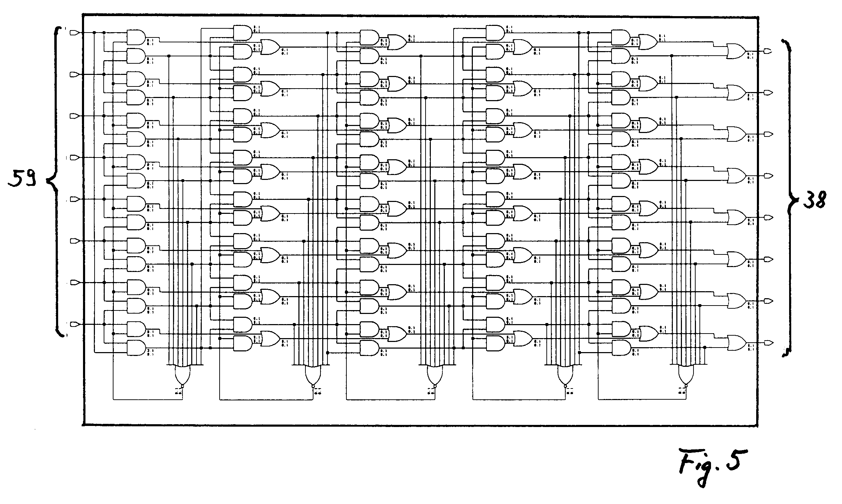

Fig 4 zeigt den schematischen Aufbau eines ersten Teils der Selektor-Logik 37. Dieser Teil besitzt den acht Eingängen 36.0 - 36.7 nachgeschaltete acht erste 51 und acht zweite D-Flipflops 52. Diese dienen zum Halten der jeweils aktuellen bzw. der jeweils vorhergehenden Prüfbits P. Die Ausgänge der Flipflops 51, 52 sind durch insgesamt neunundzwanzig UND-Tore 53, 55 und sechs ODER-Tore 56 mit weiteren acht Flipflops 58 verbunden. Diese dritten Flipflops 58 zeigen an, an welchen der Eingänge 36.0 - 36.7 ein Ja-Wert J anliegt und an welchen der Eingänge ein Nein-Wert K. Parallel hierzu gibt es ein weiteres ODER-Tor 57, an dessen Ausgang ablesbar ist, ob wenigstens eine Gruppe von drei direkt benachbarten Ja-Werten J vorhanden ist oder nicht. Die Ausgänge 59 des ersten Teils bilden die Eingänge des in Fig. 5 gezeigten zweiten Teils der Selektor-Logik 37. Dieser zweite Teil umfasst achtzig UND-Tore und fünfundvierzig ODER-Tore, die in sechs Gruppen sukzessive aufeinanderfolgen. Jede Gruppe entspricht dabei einem der weiter unten beschriebenen, logischen Verarbeitungsschritte.

Die acht Ausgänge bildet insgesamt den genannten, mit dem Schalter 39 verbundenen Steuerausgang 38.

Die Phasenermittlungsvorrichtung 11 arbeitet wie folgt: Über die Übertragungsleitung 24 erreichen laufend und zeitmultiplexiert Datenpakete D den Eingangsverstärker 23. Am Ausgang dieses Verstärkers 23 bzw. am Dateneingang 13 liegen damit durch die Übertragung verzerrte Bits an, die nachfolgend zu einwandfreien Digitalbits regeneriert werden sollen. Der genaue Anfangszeitpunkt jedes der Datenpakete D und die Phasenlage seiner Bits sind dabei vorerst unbekannt.Es ist aber bekannt, dass am Anfang der Datenpakete D jeweils eine Bitfolge plaziert ist, die dem vorgegeben Schlüsselwort S entspricht. Es gilt nun, diese Bitfolge zu erkennen.

Die Bits der Datenpakete D laufen nun in die Verzögerungskette 30 ein, durch die sie in Schritten von 1/8 Bitlänge ständig und sukzessive verzögert werden. An den Abgriffen 32.0 - 32.7 der Verzögerungskette 30 liegen hierdurch identische Signale an, die sich nur durch ihre unterschiedlichen Zeitverzögerungen unterscheiden.

Der eigentliche Phasenermittlungsprozess beginnt durch ein Signal am Triggereingang 17, durch welches zum einen alle Flipflops der Vorrichtung 11 in ihre Ausgangslage zurückgestellt werden (clear). Gesteuert durch den Takt T am Takteingang 15 werden zum zweiten nun im Abstand von jeweils einem Bit von allen Schieberegistern 33.0 - 33.7 gleichzeitig die jeweils momentan an den Abgriffen 32.0 - 32.7 der Verzögerungskette 30 anliegenden Signalwerte abgetastet. Die hierbei gewonnenen Abtastwerte A werden in das jeweils erste Flipflop 34.1 der Schieberegister 33.0 - 33.7 eingeschrieben. Dieser Vorgang wiederholt sich, wodurch sich alle Schieberegister 33.0 - 33.7 sukzessive mit einer Folge von Abtastwerten A füllen. Jeder Wortkorrelator 35.0 - 35.7 liest ständig im Takt T den Inhalt des jeweils zugeordneten Schieberegisters 33.0 - 33.7. Am Ausgang 36 jedes Wortkorrelators 35.0 - 35.7 ergeben sich hierbei anfangs nur Nein-Werte K der Prüfbits P. Wegen der Ein-Fehler-Verträglichkeit der Wortkorrelatoren 35.0 - 35.7 kann sich erstmals nach sieben Taktschritten die Möglichkeit einer positiven Korrelation und damit ein Ja-Wert J ergeben. Es kann aber auch wesentlich länger dauern, bevor sich wenigstens ein einziger Ja-Wert J ergibt, d.h. bevor die Folge der Abtastwerte in einem der Schieberegister 33.0 - 33.7 dem Schlüsselwort S entspricht.

Sobald der erste Ja-Wert J auftritt, muss im allgemeinen beim nächsten Taktschritt ebenfalls wenigstens ein Ja-Wert J auftreten. Insgesamt sollten wenigstens drei Ja-Werte J auftreten, im Höchstfall jedoch nicht mehr als acht Ja-Werte J. Dies rührt daher, dass die gesuchte Phase der Datenbits im allgemeinen nicht mit der Phase des Taktes T am Takteingang 13 übereinstimmt und daher die Datenbits durch die Taktsignale T zerschnitten werden. Nur in den Sonderfällen zufälliger Übereinstimmung der genannten beiden Phasen oder sehr schlechter Korrelation ergeben sich Ja-Werte J nur während eines einzigen Taktschrittes T.

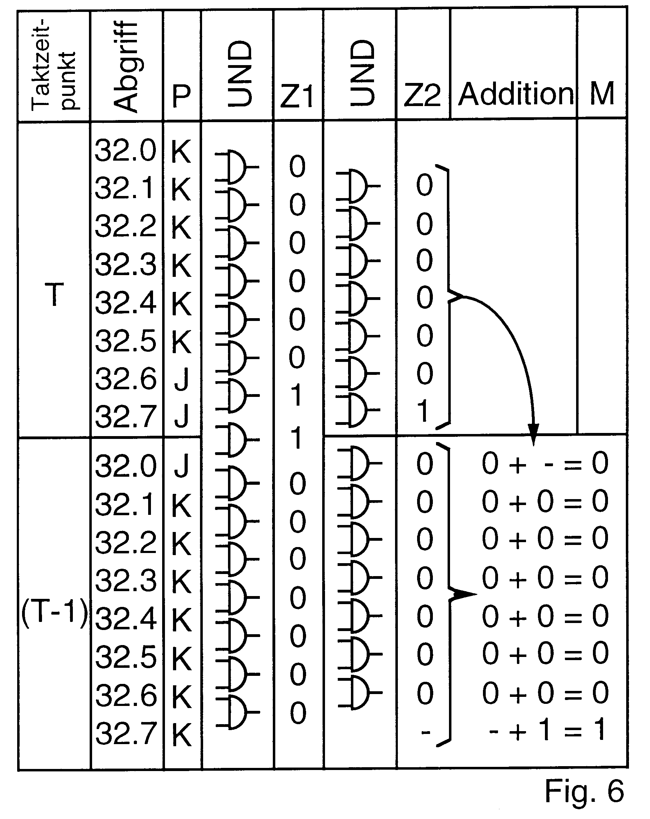

Die Weiterverarbeitung der Ja-Werte J erfolgt durch die Selektor-Logik 37. Diese ist so ausgebildet, dass unabhängig von der jeweiligen Verteilung der Ja-Werte J und Nein-Werte K an den Ausgängen 36.0 - 36.7 der verschiedenen Wortkorrelatoren 35.0 - 35.7 und der zwei beschriebenen, aufeinanderfolgenden Taktschritte jeweils ein einziger Mittelwert M ausgegeben wird. Dieser Ablauf lässt sich am besten anhand von Beispielen beschreiben. Fig 6 zeigt hierzu in der dritten Spalte von links eine erste Verteilung von Prüfbits P, die zwei Taktschritten (T-1) und T und einzeln den Abgriffen 32.0 - 32.7 der Verzögerungskette 30 zugeordnet sind. Diese Prüfbits P werden nun durch logische UNDs mit ihren Nachbar-Bits kombiniert (dargestellt durch Symbole von UND-Toren), wodurch sich erste Zwischen-Bits Z1 ergeben (zweite Spalte von links), die nur dann den logischen Wert 1 besitzen, wenn beide zugeordneten Prüfbits P einen Ja-Wert J angeben. In einem weiteren Schritt wird der UND-Prozess wiederholt, wodurch sich zweite Zwischenbits Z2 ergeben mit einer einzigen logisch 1. In einem dritten Schritt werden die zweiten Zwischenbits Z2 der beiden Taktschritte (T-1) und T addiert. Das Ergebnis bilden dritte Zwischenbits Z3 mit ebenfalls nur einer einzigen logischen 1. In diesem extremen Beispiel mit nur drei Ja-Werten J am Anfang ist hiermit der Mittelwert M bereits gefunden. Dieser entspricht der Position der logischen 1 und ist demnach dem Abgriff 32.7 zugeordnet.

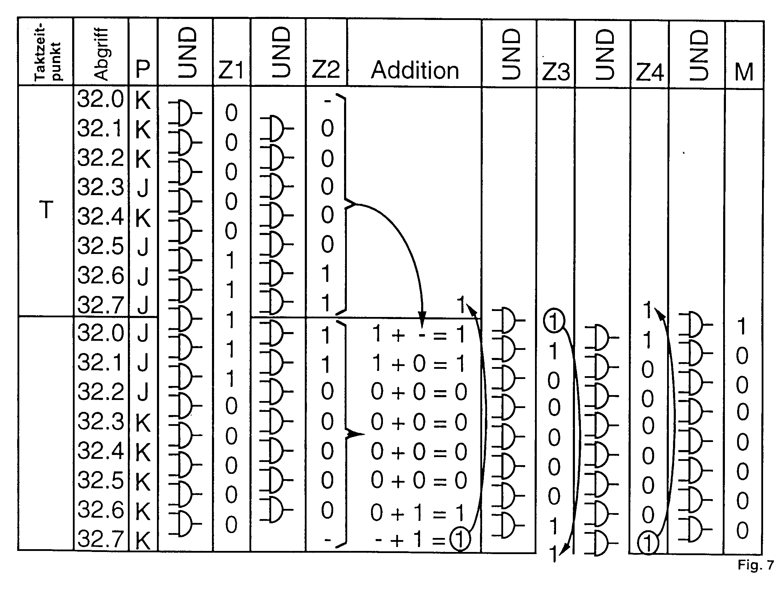

Fig. 7 zeigt ein weiteres Beispiel, diesmal mit sieben Ja-Werten J. Analog zur Beschreibung von Fig. 6 ergeben sich nach drei Schritten insgesamt sechs dritte Zwischenbits Z3 mit dem Wert logisch 1. In weiteren UND-Prozessen wird nun die Zahl der Werte logisch 1 solange vermindert, bis zum Schluss nur noch ein einziger solcher Wert logisch 1 vorhanden ist. Dieser letzte, einzige Wert logisch 1 bildet nun den gesuchten Mittelwert M. Im gewählten Beispiel ist er ebenfalls dem Abgriff 32.7 zugeordnet.

Der Seriellausgang 43.1 - 43.7 desjenigen Schieberegisters 33.0 - 33.7, das an den durch den ermittelten Mittelwert M ausgewählten Abgriff 32.0 - 32.7 angeschlossen ist, wird zum Schluss über den Schalter 39 an den Datenausgang 19 der Vorrichtung 11 angeschaltet. Hierdurch gelangen alle weiteren Bits des Datenpaketes D mit der optimalen Phase abgetastet und damit regeneriert sowie um die Verweildauer im jeweiligen Schieberegister 33.0 - 33.7 verzögert an den Datenausgang 19. Die Verzögerung im Schieberegister ist deswegen nötig, damit keines der Bits verloren geht, was bei direkter Verbindung des jeweiligen Abgriffs 32.0 - 32.7 mit dem Datenausgang 19 der Fall wäre.

Das Schlüsselwort S kann beispielsweise wie beschrieben acht Bits umfassen und die Bitfolge 11110110 sein. Es ist jedoch grundsätzlich jede andere Bitfolge möglich, die gut korrelierbar ist. Als weitere Forderungen sind eine gewisse Fehlerverträglichkeit und die Unempfindlichkeit gegenüber vorauslaufenden, unbekannten, d.h. beliebigen Bits gefragt. Weiter sollte die Länge des Schlüsselwortes S nicht zu gross sein, um den Hardware-Aufwand, zum Beispiel die Länge der Schieberegister 33.0 - 33.7, nicht unnötig zu vergrössen. Praktisch bewährt hat sich die Folge 111001011 aus neun Bits. Neun Bits deshalb, weil eine Ein-Fehler-Verträglichkeit berücksichtigt ist.

Die Phasenermittlungsvorrichtung 11 in der beschriebenen Ausführung ist zur Integration als Halbleiterbaustein geeignet. Ein solcher Baustein lässt sich in einem passiven, optischen Netzwerk PON einsetzen, d.h. bei passiven Teilnehmeranschlüssen, die in unterschiedlichen Abständen von einem aktiven Knoten liegen und keine eigene Takteinheit aufweisen. Aus diesem Grund ergeben sich bei solchen Teilnehmeranschlüssen nur ungenau bekannte und unterschiedliche Verzögerungen, insbesondere hervorgerufen durch unterschiedliche Laufzeiten.

Neben den genannten Varianten sind eine ganze Reihe weiterer Ausführungsarten der Erfindung möglich. So kann die Zahl N grösser oder kleiner als acht sein. Die verschiedenen, beschriebenen Funktionen und Prozeduren können wie geschildert durch spezielle Schaltungsanordnungen durchgeführt werden oder auch durch Prozessoranordnungen, die mittels zugeordneter Programme gesteuert werden.

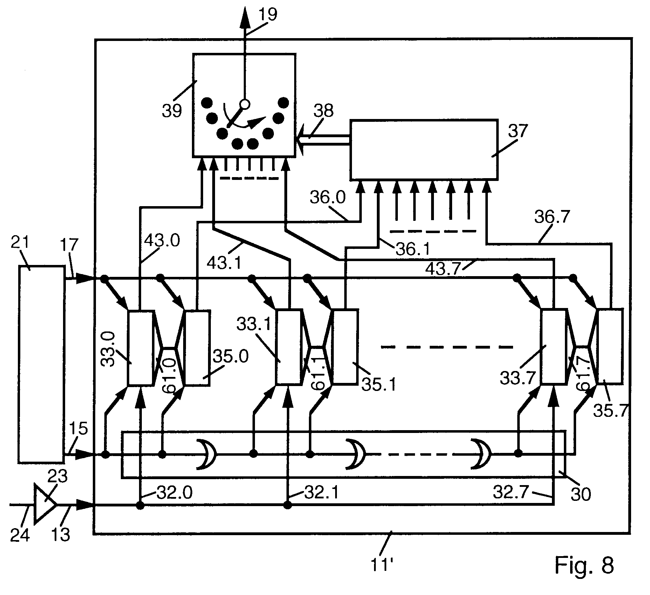

Fig. 8 zeigt zum Schluss eine Variante der beschriebenen Phasenermittlungsvorrichtung 11 entsprechend Fig. 1. Bei dieser zweiten Phasenermittlungsvorrichtung 11' werden entsprechend der genannten Schrift US 5,140,617 nicht die über die Übertragungsleitung 24 ankommenden Datenpakete D verzögert, sondern die am Takteingang 15 anliegenden Taktsignale T. Hierdurch ergeben sich an den Eingängen 32.0 - 32.7 der Schieberegister 33.0 - 33.7 wie gehabt zeitlich gestaffelte Abtastzeitpunkte für das über den Dateneingang 13 ankommende Datensignal. Die Auswertung der Ergebnisse der Wortkorrelatoren 35.0 - 35.7, d.h. der Prüfbits P durch die Selektor-Logik 37 erfolgt jeweils am Ende des jeweiligen Taktes T oder - was das gleiche ist - zu Beginn des jeweils nachfolgenden Taktes (T+1). Ansonsten arbeiten die beiden Versionen der Phasenermittlungsvorrichtung 11 und 11' gleich.

## Patentansprüche

1. Verfahren zum Ermitteln einer jeweiligen Abtastphase für Datenpakete (D), die mit unbekannter Bitphase zeitmultiplexiert ankommen, und zum nachfolgenden Abtasten der Bits des jeweiligen Datenpakets (D),
- wobei in jedem Datenpaket (D) und dem Empfänger ein einheitliches Schlüsselwort (S) enthalten ist,
- wobei jedes Datenpaket (D) mit einem Takt (T), der dem Bittakt der Datenpakete entspricht, jeweils mehrmals zeitlich gestaffelt abgetastet wird,
- wobei die im genannten Takt (T) entstehenden Abtastbits (A) jeweils gespeichert und hierdurch in einer Mehrzahl paralleler Speicher (33.0 - 33.7) sukzessive unterschiedliche Abtastworte gebildet werden,
- wobei jedes dieser Abtastworte zur Feststellung seiner Gleichheit mit dem einheitlichen Schlüsselwort (S) durch Kreuzkorrelation mit dem im Empfänger enthaltenen Schlüsselwort verglichen wird, und
- wobei aus den Ergebnissen der Kreuzkorrelationen die gesuchte Abtastphase ermittelt wird, mit der nachfolgend die Bits des jeweiligen Datenpakets (D) abgetastet werden, dadurch gekennzeichnet,
- dass nach jedem Taktschritt mit dem Inhalt jedes der Speicher (33.0 - 33.7) und dem im Empfänger enthaltenen Schlüsselwort (S) eine Kreuzkorrelation durchgeführt wird,
- dass als Ergebnis jeder dieser Kreuzkorrelationen ein zweiwertiges Prüfbit (P) abgegeben wird, wobei eine wenigstens weitgehende Gleichheit zwischen dem jeweiligen Abtastwort und dem Schlüsselwort (S) durch einen Ja-Wert (J) angezeigt wird,
- dass die Gesamtheit der Prüfbits (P) eines Taktschrittes jeweils für die Dauer des jeweils nächsten Taktschrittes gespeichert und jeweils auf das Auftreten wenigstens eines Ja-Wertes (J) überwacht wird, und
- dass nach demjenigen Taktschritt, der auf das erste Auftreten eines Ja-Wertes (J) folgt, die mittlere Position (M) der Gesamtheit der gespeicherten und der aktuellen jeweiligen Ja-Werte (J) ermittelt wird.

2. Verfahren nach Anspruch 1,
dadurch gekennzeichnet,
dass ein Ja-Wort (J) abgegeben wird, wenn bei einer Länge von n Bits des Schlüsselwortes (S) entweder n oder (n - 1) Bits des Abtastwortes mit den entsprechenden Bits des Schlüsselwortes (S) übereinstimmen.

3. Verfahren nach Anspruch 1,
dadurch gekennzeichnet,
dass das Schlüsselwort (S) die Bit-Folge 111001011 mit einer Länge von (n + 1) ist, wobei die Wertigkeit 1 des Prüfbits (P) dem Ja-Werte (J) entspricht.

4. Verfahren nach Anspruch 1,
dadurch gekennzeichnet,
- dass die mittlere Position (M) in sukzessiven Logikschritten ermittelt wird,
- indem die gespeicherten und die aktuellen Prüfbits (P) als eine einzige Folge angesehen werden,
- indem alle Paare benachbarter Bits dieser Folge mittels der logischen UND-Funktion kombiniert werden zur Bildung einer zweiten Bit-Folge,
- indem geprüft wird, ob in der neuen Bit-Folge nur ein einziger Ja-Wert (J) vorhanden ist oder nicht,
- indem, sofern mehr als ein einziger Ja-Wert (J) vorhanden ist, mittels der logischen UND-Funktion aus den Paaren benachbarter Bits der zweiten Bit-Folge eine dritte Bit-Folge gebildet wird, und
- indem in analoger Weise fortgefahren wird, bis ein schliesslich gefundener, einziger Ja-Wert (J) die gesuchte mittlere Position (M) angibt.

5. Vorrichtung (11) zum Ermitteln einer jeweiligen Abtastphase für Datenpakete (D), die mit unbekannter Bitphase zeitmultiplexiert ankommen, und zum nachfolgenden Abtasten der Bits des jeweiligen Datenpakets (D), entsprechend dem Verfahren nach Anspruch 1,
- mit wenigstens einem Dateneingang (13), einem Datenausgang (19) und einem Takteingang (15),
- mit einer Verzögerungskette (30), die N parallele Abgriffe (32.0 - 32.7) und N-1 gleiche, seriell angeordnete Verzögerungsglieder (31.1 - 31.7) aufweist, wobei jedes Verzögerungsglied eine Verzögerung bewirkt, die etwa der Grösse Bitdauer/N entspricht,
- mit N gleichen Schieberegistern (33.0 - 33.7) als Speicher, die eine Länge aufweisen, die der Länge N des Schlüsselwortes (S) entspricht, und die einen Serielleingang, Parallelausgänge und jeweils einen Seriellausgang (43.0 - 43.7) besitzen,
- mit N gleichen Wortkorrelatoren (35.0 - 35.7), die jeweils an die Parallelausgänge eines zugeordneten der Schieberegister (33.0 - 33.7) angeschlossen sind, zum Prüfen, ob der Inhalt der Schieberegister dem Schlüsselwort (S) entspricht oder nicht und zum Abgeben jeweils eines zugeordneten Prüfbits (P) an den jeweiligen Ausgang (36.0 - 36.7),
gekennzeichnet
- durch eine Selektor-Logik (37) mit N parallelen Eingängen, die an die Ausgänge (36.0 - 36.7) der Wortkorrelatoren (35.0 - 35.7) angeschlossen sind und mit einem einzigen Ausgang (38), zum Ermitteln der mittleren Position (M) der jeweiligen Ja-Werte (J), und
- durch einen über den Ausgang (38) des Selektor-Logik (37) gesteuerten, N-poligen Schalter (39), dessen Eingangspole an die Seriellausgänge (43.0 - 43.7) der Schieberegister (33.0 - 33.7) angeschlossen sind, und dessen Ausgang den Datenausgang (19) der Vorrichtung (11) bildet.

6. Vorrichtung nach Anspruch 5,
dadurch gekennzeichnet,
dass die Vorrichtung (11) als integrierter Halbleiterbaustein ausgebildet ist.
